# EUROPEAN PATENT APPLICATION

(11) **EP 0 900 964 A1**
(43) Date of publication of application: **10.03.1999**
(21) Application number: 98202990.2
(22) Date of filing: 07.09.1998
(51) Int. Cl.: F16L 5/04

(54) **Fire and smoke resistant seal**

(30) Priority: 08.09.1997 NL 1006973
(71) Applicant: Applicom B.V., 2517 GS Den haag (NL)
(72) Inventor: Kuipers, Jan Cornelis, 3208 SH Spijkenisse (NL)
(74) Representative: 't Jong, Bastiaan Jacobus

(57) **Abstract**

A fire and smoke-resistant seal (1) for a pipe (3) fed through a floor or wall (2), comprising a first jacket (4) which is arranged at a distance round the pipe (3) and which is fixed to the floor or the wall (2), a second jacket (5) which is arranged at a different distance round the pipe (3) and which is fixed to the pipe (3), wherein the first and second jacket (4,5) partially overlap each other to obtain an inner and outer jacket (7,8), and a fire and smoke-resistant, flexible filler body (10) arranged in the gap-like space (9) between the pipe (3) and the inner jacket (7) and/or between the inner and outer jacket (7,8), whereby a flexible seal is obtained which is able to absorb vibrations and thermal expansions of the pipe (3) and which complies with specified fire safety regulations under all conditions.

## Description

The present invention relates to a fire and smoke-resistant seal for a pipe fed through a floor or wall.

The present invention relates particularly to pipes for fluids which are connected to installations whereby these pipes are subject to vibrations and thermal expansions. A problem occurs when a pipe which is subject to vibrations and thermal expansions is fed through a floor or wall. On the one hand the sleeve of a pipe in a floor or wall must comply with the specified fire safety regulations, i.e. be sealed in fire and smoke-resistant manner. On the other hand the seal must be flexible to be able to absorb the vibrations and thermal expansion of the pipe.

The present invention has for its object to provide a solution to the above stated problem. Provided for this purpose is a fire and smoke-resistant seal for a pipe fed through a floor or wall, comprising a first jacket which is arranged at a distance round the pipe and which is fixed to the floor or the wall, a second jacket which is arranged at a different distance round the pipe and which is fixed to the pipe, wherein the first and second jacket partially overlap each other to obtain an inner and outer jacket, and a fire and smoke-resistant, flexible filler body arranged in the gap-like space between the pipe and the inner jacket and/or between the inner and outer jacket.

A seal is hereby obtained which is capable of absorbing vibrations and thermal expansions of the pipe and which is fire and smoke-resistant under all conditions.

The second jacket is preferably the outer jacket, so that dust and cleaning agent cannot enter the seal and cannot adversely affect the filler body.

In a preferred embodiment the filler body is tubular and is wrapped round the inner jacket or the pipe. Owing to the form of the cross-sectional surface thereof, the filler body formed in this manner is well able to absorb vertical and a horizontal displacements of the wall of the pipe relative to the sleeve in the floor or the wall.

The filler body is preferably arranged between the inner and outer jacket. Since the filler body lies at a greater distance round the pipe and a greater filler body mass is therefore provided, the vibrations and thermal expansions of the pipe can be absorbed better.

In a preferred embodiment the inner surfaces of one of the two or both jackets are provided with a thermal swelling material as fire-resistant filler body. In the case of fire this material swell as a result of the rise in temperature and fills the gap-like space between the outer and inner jacket and/or the inner jacket and the pipe. The swelling material then prevents the fire, or the temperature, from spreading.

In order to make the second jacket uniformly suitable for all kinds of pipes of different diameters, adapter elements are received in the passage of the jacket fixed to the pipe.

Shown in the annexed drawings are a number of embodiments of the present invention which are further described hereinbelow. Herein:
fig. 1 shows a perspective, partly sectional view of a fire and smoke-resistant seal for a pipe fed through a floor or wall,
fig. 2 is a perspective view of the seal according to fig. 1 with exploded parts,
fig. 3 shows a cross-sectional view of a second embodiment of the seal,
fig. 4 shows a third embodiment of the seal, and
fig. 5 shows a fourth embodiment of the seal.

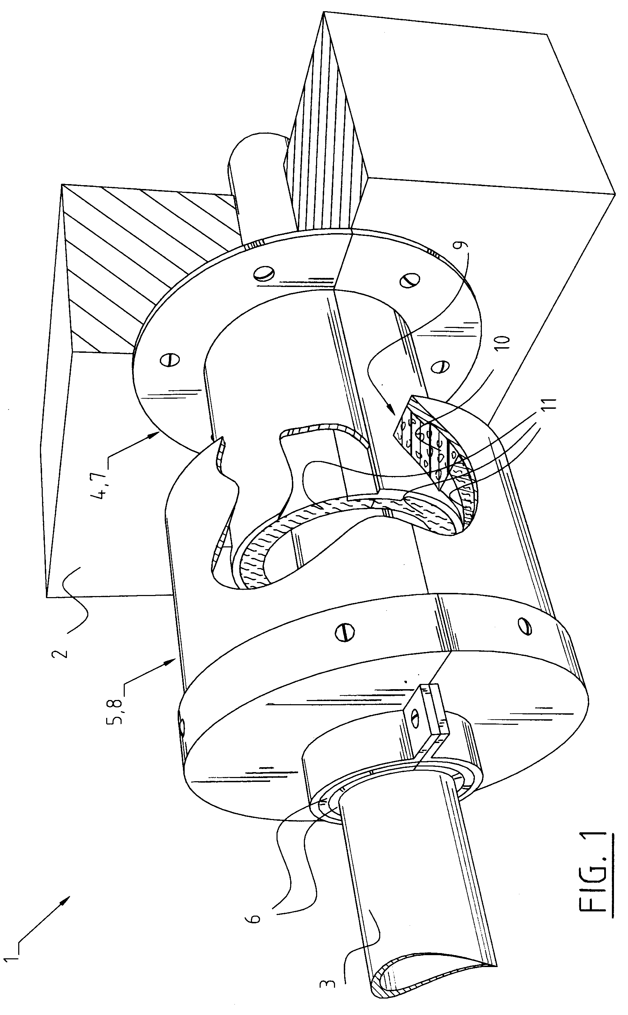

Fig. 1 shows a fire and smoke-resistant seal 1 for a pipe 3 which is fed through a floor or wall 2. Seal 1 comprises a first jacket 4 which is arranged at a distance round pipe 3 and which is fixed to the floor or the wall 2, and a second jacket 5 which is arranged at a different distance round pipe 3 and which is fixed to pipe 3. To enable fixing of second jacket 5 to different pipes of differing diameter adapter elements 6 are received in the passage of this jacket 5.

First jacket 4 and second jacket 5 overlap each other partially, so that it is possible to speak of an inner and outer jacket, respectively 7 and 8, and in fig. 1 respectively first jacket 4 and second jacket 5. Because inner jacket and outer jacket 7, 8 overlap each other partially and both jackets are arranged at a different distance round pipe 3, a gap-like space 9 is formed between inner jacket 7 and outer jacket 8. A fire-resistant, flexible filler body 10 is arranged in gap-like space 9. The inner surfaces of first jacket 4 and second jacket 5 are further provided with a thermal swelling material 11 as fire-resistant filler body.

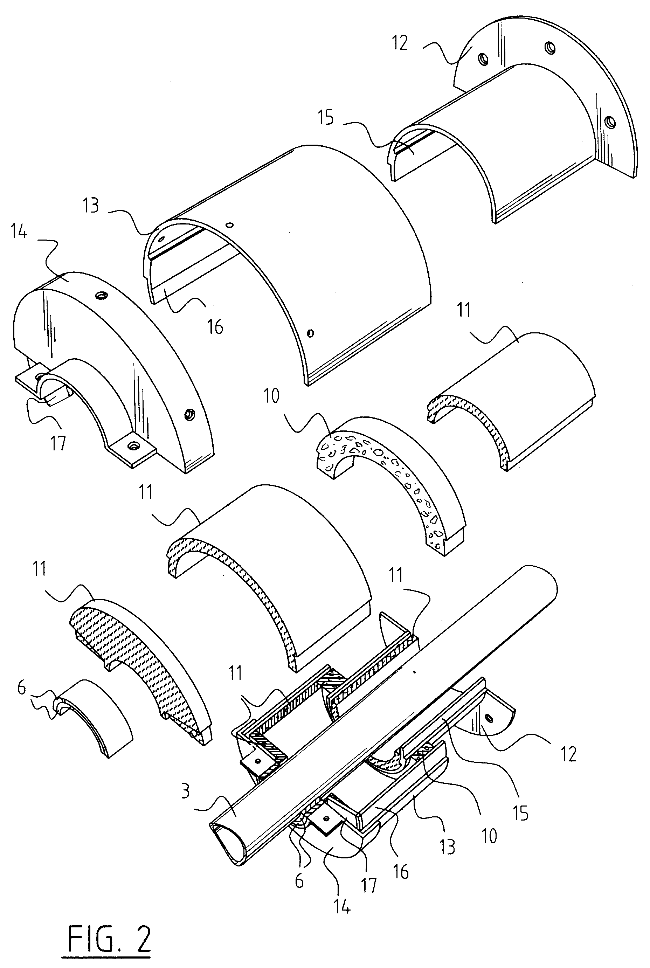

In fig. 2 the seal 1 of fig. 1 is once again shown in perspective, but now with exploded parts. To enable arrangement of seal 1 on existing pipes, the first jacket 4 is constructed from two symmetrical parts 12 wherein each symmetrical part 12 comprises a flange strip 15 formed integrally thereon. Second jacket 5 is constructed from two symmetrical parts 13, wherein each symmetrical part 13 comprises a flange strip 16, and two symmetrical parts 14 which likewise both comprise a flange strip 17 and which drop over symmetrical parts 13. Symmetrical parts 14 together form a passage for a pipe 3, in which passage the adapter elements 6 are received to enable fixing of the second jacket to pipe 3. The different parts 12, 13 and 14 are embodied with flange strips 15, 16 and 17, so that in the case of thermal expansion of the material the different parts remain mutually connected on each other.

Fig. 2 shows clearly that the inner surfaces of the parts 12 of first jacket 4 and the inner surfaces of the parts 13, 14 of second jacket 5 are lined with the thermal swelling material 11 and that filler body 10 is arranged between the parts 13 of second jacket 5 and the parts 12 of first jacket 4. It will be apparent that each jacket can also consist of one integrally formed part arranged at a distance round the pipe.

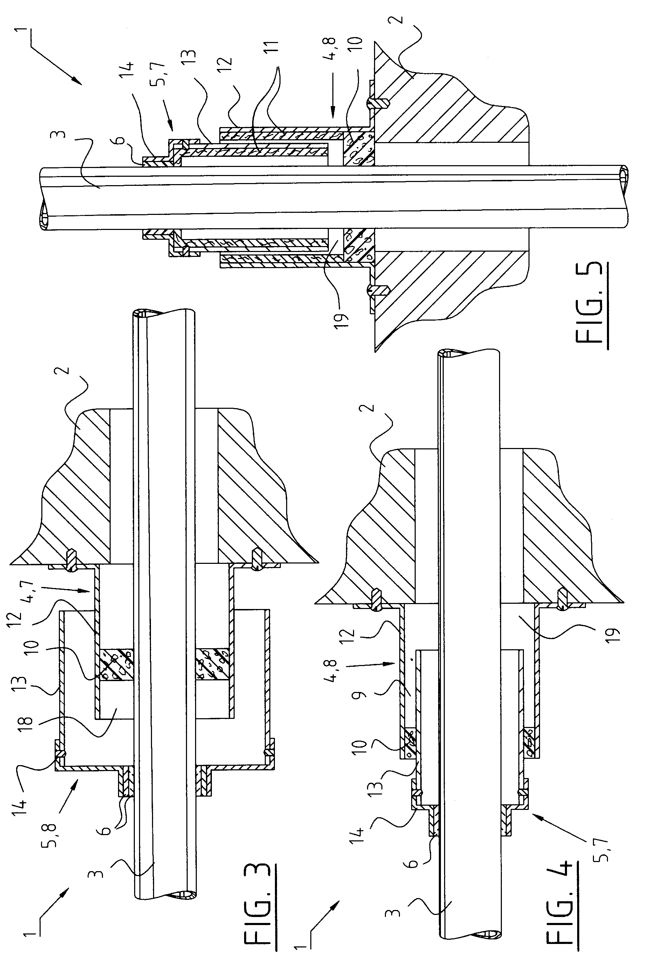

Fig. 3 shows in cross-section a second embodiment of the seal according to the invention. The difference from the first embodiment of fig. 1 and 2 is that filler body 10 is arranged in the gap-like space 18 between pipe 3 and inner jacket 7. This filler body is fire and smoke-resistant and it is therefore not necessary to provide the inner surfaces of the jackets with the thermal swelling material 11.

The third embodiment of the seal 1 according to the present invention is shown in fig. 4. In this case the first jacket 4 is arranged at a greater distance round pipe 3 than the second jacket 5. Second jacket 5 hereby forms inner jacket 7 and first jacket 4 forms outer jacket 8. As in the first embodiment of the seal 1 according to fig. 1, 2, filler body 10 is arranged in the gap-like space 9 between inner jacket 7 and outer jacket 8.

In the fourth embodiment according to fig. 5, the second jacket 5 also forms the inner jacket 7 and the first jacket 4 the outer jacket 8. The smoke-resistant filler body 10 is arranged between outer jacket 8 and pipe 3. The inner surfaces of both jackets 4, 5, respectively 8, 7, are lined with the thermal swelling material 11 as fire-resistant filler body.

The different embodiments show that the flexible filler body 10 can be arranged at different positions, and that, depending on the properties of this filler body, the inner surfaces of the jackets can be lined with thermal swelling material as fire-resistant filler body. In all embodiments it is ensured that the seal is fire and smoke-resistant and capable of absorbing the thermal expansions and vibrations of the pipe, since the first jacket 4 fixed to the floor or wall can move in all directions relative to the second jacket 5 which is fixed to the pipe. It will be apparent that instead of a circular cross-section the jackets can have a different cross-sectional form, for instance rectangular.

## Claims

1. Fire and smoke-resistant seal for a pipe fed through a floor or wall, **characterized by** a first jacket which is arranged at a distance round the pipe and which is fixed to the floor or the wall, a second jacket which is arranged at a different distance round the pipe and which is fixed to the pipe, wherein the first and second jacket partially overlap each other to obtain an inner and outer jacket, and a fire and smoke-resistant, flexible filler body arranged in the gap-like space between the pipe and the inner jacket and/or between the inner and outer jacket.

2. Fire and smoke-resistant seal as claimed in claim 1, **characterized in that** the second jacket is the outer jacket.

3. Fire and smoke-resistant seal as claimed in either of the foregoing claims, **characterized in that** the filler body is tubular and is wrapped round the inner jacket or the pipe.

4. Fire and smoke-resistant seal as claimed in any of the foregoing claims, **characterized in that** the filler body is arranged between the inner and outer jacket.

5. Fire and smoke-resistant seal as claimed in any of the foregoing claims, **characterized in that** the inner surfaces of one of the two or both jackets are provided with a thermal swelling material as fire-resistant filler body.

6. Fire and smoke-resistant seal as claimed in any of the foregoing claims, **characterized in that** adapter elements are received in the passage of the jacket fixed to the pipe.
